(19)

Europäisches
Patentamt

European
Patent Office

Office européen
des brevets

(11) **EP 2 075 452 B1**

(12) **EUROPEAN PATENT SPECIFICATION**

(45) Date of publication and mention
of the grant of the patent:
**09.03.2011 Bulletin 2011/10**

(51) Int Cl.:
*F02M 31/125* *(2006.01)*   *F02M 37/22* *(2006.01)*

(21) Application number: **09157773.4**

(22) Date of filing: **04.08.2004**

(54) **Device for heating a fluid used in a motor vehicle, in particular a fuel**

Einrichtung zum Heizen eines in einem Kraftfahrzeug verwendeten Fluids, insbesondere eines Kraftstoffes

Dispositif de chauffage d'un fluide utilisé dans un véhicule à moteur, notamment d'un carburant

(84) Designated Contracting States:
**DE ES FR GB IT**

(30) Priority: **05.08.2003 IT TO20030603**

(43) Date of publication of application:
**01.07.2009 Bulletin 2009/27**

(62) Document number(s) of the earlier application(s) in
accordance with Art. 76 EPC:
**04018437.6 / 1 505 292**

(73) Proprietor: **Eltek S.p.A.**
**15033 Casale Monferrato (AL) (IT)**

(72) Inventors:
  • **Colombo, Paolo**
    **15033, Casale Monferrato (AL) (IT)**

  • **Bigliati, Marco**
    **15033, Casale Monferrato (AL) (IT)**
  • **Zorzetto, Mauro**
    **15033, Casale Monferrato (AL) (IT)**

(74) Representative: **Gallarotti, Franco**
**Buzzi, Notaro & Antonielli d'Oulx**
**Via Maria Vittoria, 18**
**10123 Torino (IT)**

(56) References cited:
**EP-A- 1 385 073     EP-A1- 0 412 210**
**EP-A1- 0 965 746     WO-A-02/064968**
**CA-A1- 2 326 869     GB-A- 2 257 749**
**US-A- 4 818 842     US-A- 5 094 198**
**US-B1- 6 375 834**

**Description**

The present invention relates to a device for heating a fluid used in a motor vehicle, in particular a fuel for diesel engines.

Devices of the type indicated above are used in severe climatic conditions, in particular in the case of very low environmental temperatures, for the purpose of producing heating of the fluid, in particular a fuel, such as a diesel fuel, before this comes out of the heater and then flows in a further device, such as for example a respective filter. In such environmental conditions, some substances, for example the paraffins present in the diesel fuel, tend to crystallize or solidify, with consequent risks of clogging of the aforesaid filter. Heating of the diesel fuel prior to its introduction into the filter thus enables the fuel to be rendered more fluid, so preventing the aforesaid risks.

Some heating devices of a known type comprise a body that is connected upstream of the filter, either directly or via the interposition of pipes.

The heating means are located inside the body so as to be lapped directly by the diesel fuel and are usually formed by a plurality of resistors with positive temperature coefficient (PTCs). Supply with d.c. current of the PTCs is usually controlled by means of an electronic power switch, such as a MOSFET. The device further comprises a sensor designed to detect the temperature of the diesel fuel, such as, for example, a resistor with negative temperature coefficient (NTC).

In general, upon ignition of the diesel engine, the aforesaid sensor detects the temperature of the diesel fuel and, in the case where this is below a pre-set threshold, the control system of the heater supplies, via the aforesaid power switch, the PTCs, with consequent heating of the fuel, which is thus rendered more fluid for the purpose of its flow through the filter.

Some known heating devices moreover integrate a pressure sensor or a vacuometer, in order to identify any possible clogging of the filter from the value of pressure of the diesel fuel detected at input to or output from the device.

The control system of some of the known heating devices is constituted by an analog circuit, inserted directly inside the aforesaid body. The type of control enabled by said analog circuit is usually rather rudimental, practically without any possibility of adaptation to changes in the requirements and factors.

In other known solutions, there are instead provided digital control circuits, which, however, are only designed to measure the values through sensors and determine thresholds of intervention or otherwise of the heaters, also signalling certain anomalous conditions, such as the aforesaid clogging of the filter. Said operations are, however, carried out on the basis of data tables or programs that are fixed or pre-defined in the design stage and can be modified only following upon direct intervention on the part of the designer.

In the known solutions, for example ones designed for a heating device which is to operate in combination with a filter of a first type, the same heating device could work in an imprecise way should it be combined with a filter of a second type, or else of a type different from the first. Similar considerations apply, for example, also to the case where the dimensions and/or the material itself constituting the body of the heating device are different from the ones for which the control circuit was designed, and will hence present different characteristics of thermal conductivity, or a different volume of the fluid to be heated. Likewise, the replacement of an individual electronic component of the circuit, due for example to contingent production requirements, can bring about a variation in the tolerances of operation of the circuit itself, with the consequent need to replace the control circuit and/or the control algorithms.

In addition to what has been said above, the components used for the assembly of electronic circuits are typically subject to drifts over time, and this, in the case of heating devices, can result in erroneous measurements of operating parameters, such as temperature and/or pressure.

CA-A1-2 326 869 discloses an electrical heater comprising a heating unit, for raising a temperature in a fluid passing through it; and three sensors for monitoring the temperatures at the entrance, exit and in the middle of the heating unit. Use is made of a microprocessor for calculating the required amount of energy to bring the fluid at the exit of the heating unit at a predetermined temperature. A pulse width driver circuit, based on the data supplied by the microprocessor, activates the heating unit by raising the temperature in it.

US-A-5 094 198 discloses an air intake heating system including a microprocessor based controller, intake manifold air temperature monitoring means, engine speed monitoring means, and electrical air heating elements actuated by the controller in response to various combinations of sensed engine speed, sensed intake manifold air temperature and sensed battery condition.

In its most general terms, the purpose of the present invention is to provide a heating device for a fluid used in a vehicle, in particular for fuel in diesel engines, which is of new conception and which will present high levels of operative precision and flexibility, safety and reliability of use.

A further purpose is to provide a heating device that can be manufactured with ease, enabling a flexible regulation or programming of the corresponding electronic circuit or else making it possible to compensate for the tolerances of the heating device and/or meet the various production or commercial requirements.

With a view to achieving the above purposes, the subject of the invention is a heating device, in particular for a fuel, having the characteristics specified in the annexed claim 1. The annexed claims are understood as forming an integral part of the present description.

Further purposes, characteristics and advantages of the present invention will emerge from the ensuing description with reference to the annexed drawings, which are provided purely by way of non-limiting example and in which:

- Figure 1 is a perspective view of a heating device according to the invention, combined with a respective filter;
- Figures 2-5 are, respectively, a first side view, a perspective view, a plan view and a second side view of the heating device of Figure 1;
- Figure 6 is an exploded view of the heating device of Figure 1;
- Figure 7 is a schematic cross-sectional view of the heating device of Figure 1;
- Figures 8-11 are enlarged details of parts of Figure 7;
- Figure 12 is a cross-sectional view, at an enlarged scale, of an area for housing a pressure sensor of the heating device of Figure 1; and
- Figure 13 is a block diagram which illustrates the control system of the heating device according to the invention.

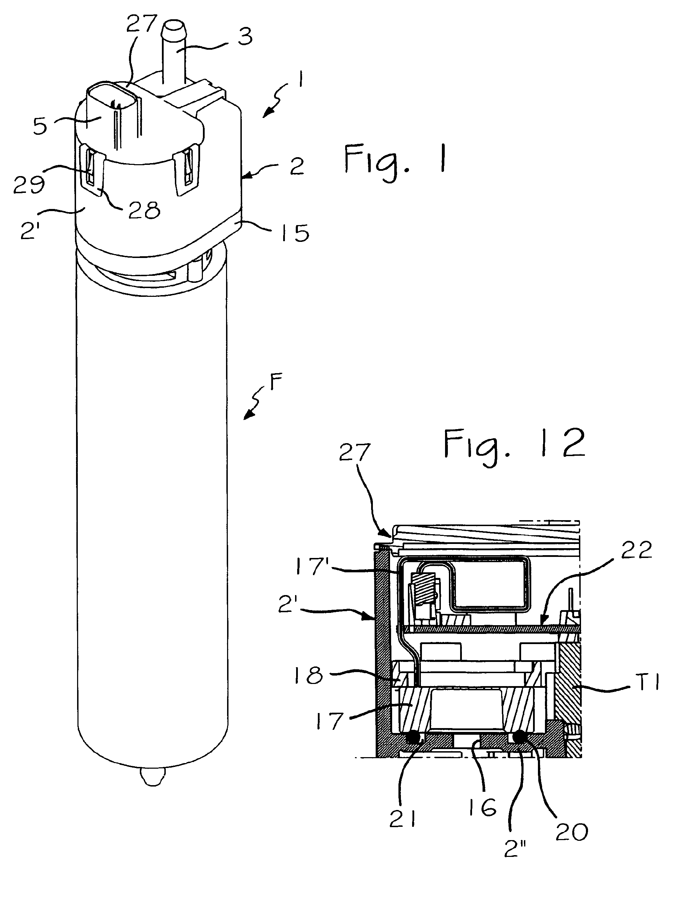

In Figure 1, the reference number 1 designates, as a whole, a heating device according to the invention, which is preferably coupled mechanically and hydraulically to a generic filter, designated by F. The type of connection between the heater 1 and the filter F lies outside the scope of the present invention and can be obtained in any known way.

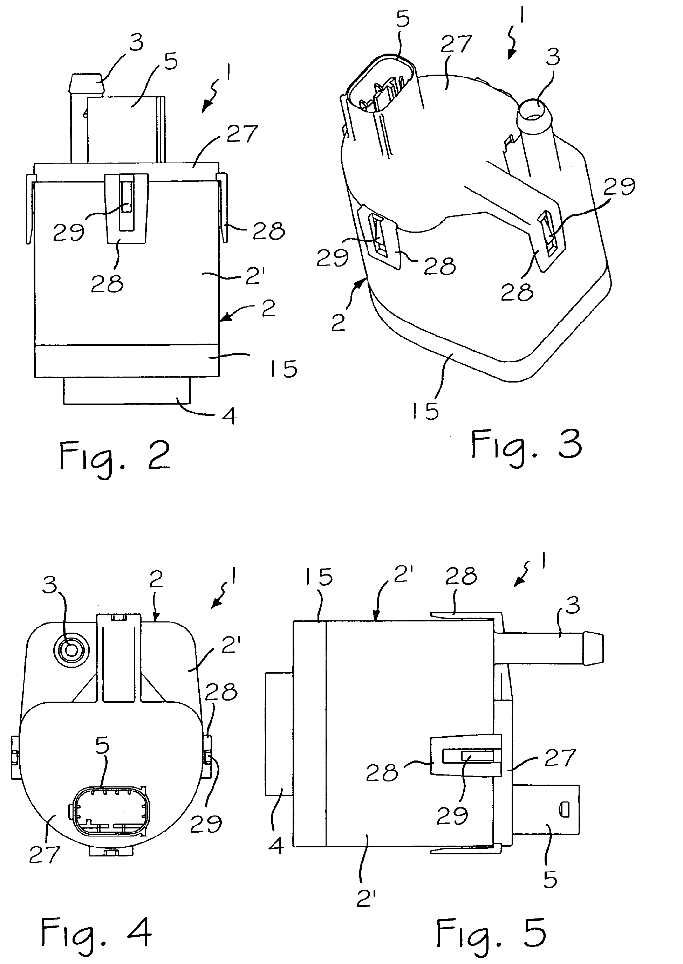

As may be seen in Figures 2-5, the device 1 has a body 2, defined in which is an inlet connector 3, designed to be connected to a supply line of a fluid, such as a fuel, for example diesel fuel, and an outlet connector 4, which in the non-limiting example is designed for connection with the filter F. The connector 3 starts from one end of the body 2 and extends parallel to the main axis of the latter, whilst the connector 4 extends axially from the opposite end of the body 2. Defined at the longitudinal end of the body 2 carrying the connector 3 is a tubular portion 5, which forms the external part of a connector for electrical connection of the device 1 for the purposes of supply and control.

As will emerge from what follows, the body 2 is made of a number of pieces (central body 2' and caps or lids at the ends 15 and 27, described in what follows), possibly made of different materials and/or having different colours, in order to improve the technical characteristics of the device 1 or facilitate identification thereof.

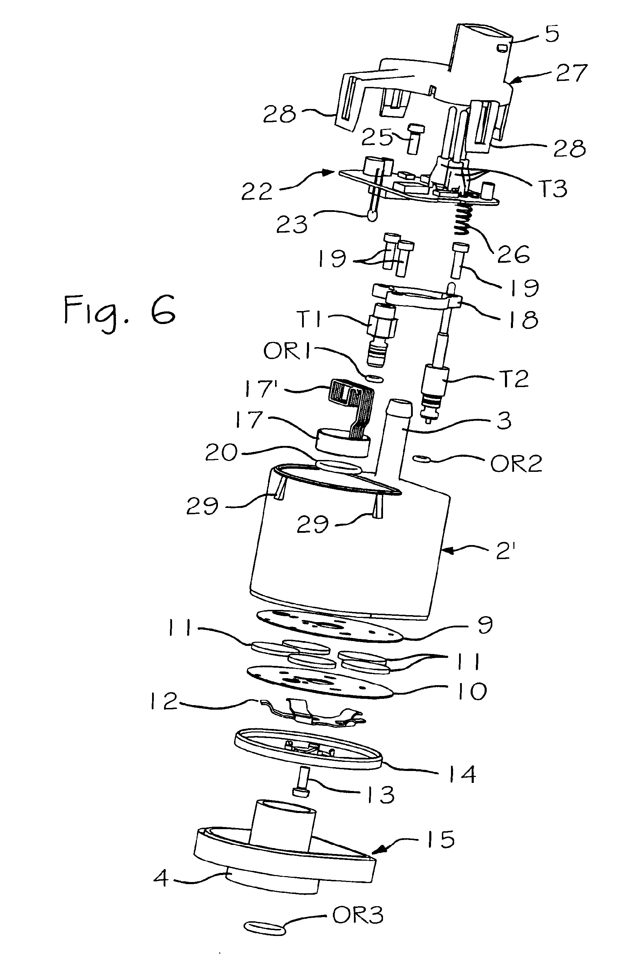

Figures 6 and 7-11 illustrate the device 1 by means of an exploded view and cross-sectional views.

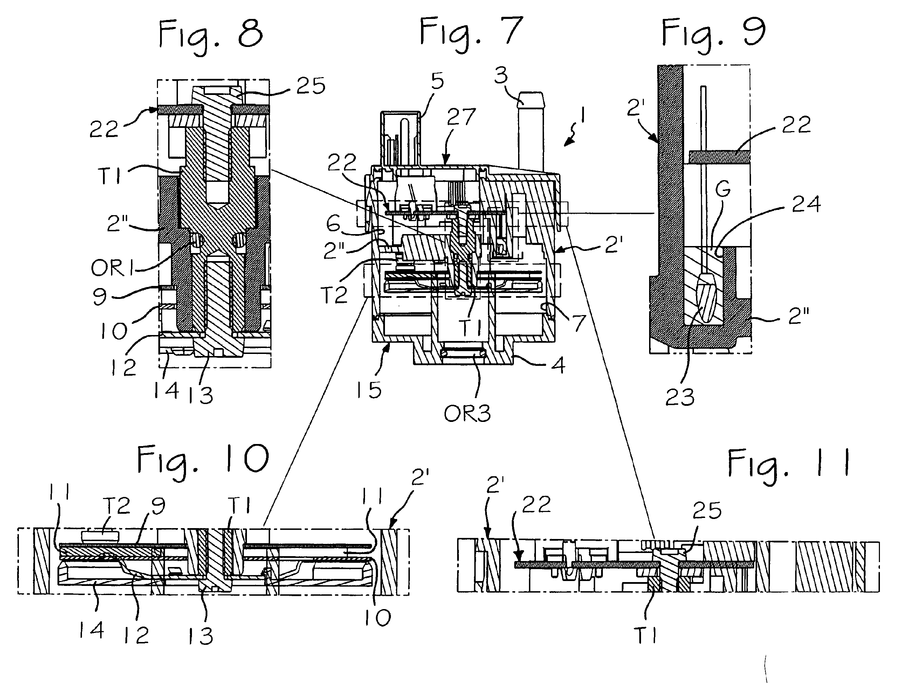

In said figures, the reference number 2' designates a portion of main body, which integrates the connector 3; the body portion 2' has a substantially tubular shape and is divided into two chambers 6, 7 by means of a respective partition wall, designated by 2" in Figures 7-9.

The bottom chamber 7 sets the connectors 3 and 4 in communication, and projecting therein are pins that rise from the wall 2", which have the function of maintaining, in positions substantially parallel to one another, two contacting elements 9 and 10, for example in the form of metal disks, between which there is arranged a plurality of PTCs, which are preferably disk-shaped, designated by 11. The contacting disk 10 is pressed in the direction of the contacting disk 9, with the resistors 11 set between, by a metal element 12, having a central portion from which there branch off elastic radial arms, having the function of springs. The element 12 is engaged, preferably via snap action, to a cup 14, for example made of thermoplastic material, by means of teeth undercut in the latter. The cup 14 is fixed, preferably by means of a screw 13, to a central terminal T1, which is provided with a respective seal element or O-ring OR1 and is inserted in a seat or passes through an opening defined in the wall 2". The terminal T1 is electrically connected to the cup 10, and hence to the resistors 11, via the element 12. Connected to the disk 9, for example via welding or mechanical riveting, is a second terminal, designated by T2, which passes through the wall 2" and is provided with a respective seal element or O-ring OR2.

The chamber 7 is closed at the bottom by means of a lid or cap 15, in which there is defined the hydraulic connector 4, preferably provided with an O-ring OR3. The fluid-tight coupling between the body portion 2' and the bottom lid 15, which are both made, for example, of thermoplastic material, can be made, for instance, via laser welding or ultrasound welding or bonding or welding via partial melting of the said body portions.

As may be seen in Figure 12, the wall 2" has an opening or gap 16 designed to set in communication the chamber 7 with a part of the chamber 6. Set in a position corresponding to said opening, within the chamber 6, is a pressure sensor 17. The sensor 17 is provided for supplying a measurement of the pressure value of the diesel fuel at input to the device, for example a measurement of the value of absolute pressure or else a differential (or relative) measurement between the pressure of the diesel fuel at input to the device and the environmental pressure or in any case a reference pressure. The measurement of pressure obtained via the sensor 17 is used by the control system of the device 1 to identify certain characteristics of operation, such as for example the presence of the diesel fuel flow or the clogging of the filter F. The sensor 17 is preferably kept in position by means of a respective support 18, for example made of thermoplastic material, fixed via fixing elements or screws 19 to the wall 2", and rests at the bottom on an elastic ring or seal element 20, preferably housed in a respective seat 21 of the wall itself that surrounds the aforesaid opening 16. The pressure sensor 17 is connected via respective electrical conductors and/or connections 17' to a board or printed circuit of a control circuit 22, which is also contained in the chamber 6. Likewise connected to said board, and hence to the circuit 22, is a temperature sensor, in particular of the NTC type, designated by 23 in Figures 6 and 9. As may be seen in Figure 9, when the device 1 is assembled, the active part of the temperature sensor 23 is housed in a cavity 24 defined in the wall 2", in a position and in such a way as to be able to detect, through said wall, the temperature of the diesel fuel. Preferably, the cavity 24 is filled with a silicone grease or a thermoconductive paste GS, embedded in which is the sensing part of the sensor 23. The function of the grease or paste GS, or other element suitable for the purpose, is to propagate the temperature correctly from the wall 2" to the sensor 23 and prevent air gaps, which could adversely affect the quality of the detection.

The wall 2", in a position corresponding to the cavity 24, preferably has a reduced thickness, in order to facilitate heat exchange, i.e., the propagation of temperature, through said wall 2", which is preferably made of thermoplastic material. Said reduced thickness is preferably less than 2/3 of the average or prevalent thickness of the rest of the wall 2".

The thermoplastic material of the body 2', 2" is preferably a material designed to guarantee a good electrical and hydraulic insulation, i.e., guarantee a good insulation and a good impermeability of the chamber of the control circuit 22, whilst at the same time presenting properties of good thermal conduction.

The board of the circuit 22 is fixed to the terminal T1, by means of a screw 25, and is thus connected electrically to the latter. Also connected to the board of the circuit 22 is the terminal T2, with the interposition of a spring 26. The electrical contacts and/or connections could in any case be made in ways different from what is illustrated herein.

Connected to said board, which carries the further electrical/electronic components of the circuit 22, are three terminals T3.

The chamber 6 is closed at the top by a lid 27, defined in which is the tubular portion 5. Said portion, together with the terminals T3 and the top end of the terminal T2 forms, as has been said, a connector for electrical supply and control of the device 1. The top lid 27 can be fixed to the body portion 2' via hooking elements of the same type as the ones illustrated in Figures 1-5, comprising elastic tabs 28 integral with the lid and engagement teeth 29 defined on the body portion 2'. Alternatively, also the lid 27, which is preferably made of thermoplastic material, can be welded to the portion of main body 2' via laser or ultrasound welding or bonding or welding via partial melting of said body portions.

To the electronic circuit 22 there can be combined a respective protection system or coating, for example for protecting it from environmental factors, moisture or dirt that could for example deposit on the circuit itself or penetrate into the chamber 6 during the assembly operations. Said protection could be obtained with known modalities, for example via a coating, i.e., a thin layer or protective film, obtained by immersing the circuit in an appropriate resin, typically a very liquid one, in such a way that the part in excess can then drip off easily when the circuit is removed from the bath of resin. Said coating could in any case be also obtained by spraying or else deposited using other techniques, and could involve also at least part of the internal walls of the chamber 6 in order to render them impermeable.

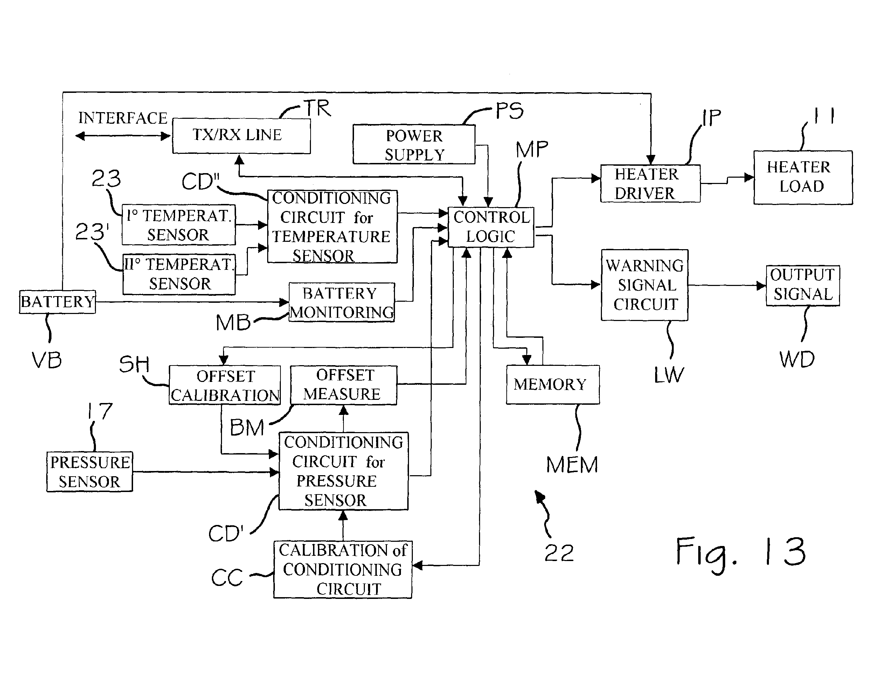

Figure 13 illustrates, by means of a simplified block diagram, the control circuit 22 of the device 1.

According to a preferential version of the invention, the electronic circuit 22 comprises at least one digital processor MP, such as a microprocessor or a microcontroller, provided with, or combined with, electronic memory means MEM, which are preferably of a nonvolatile type and/or are electronically re-writable; for example they may be of an EEPROM or Flash type. Said memory means MEM are designed to retain information permanently even in the absence of electrical supply and/or are designed to enable reading and writing even after they have been mounted or assembled on the electronic circuit 22. Implemented in said memory means MEM is at least part of the control logic and/or of the data necessary for operation of the device itself. The microcontroller MP is supplied through a respective supply stage, for example of a type in itself known, designated by PS, which can undergo variations in the output voltage according to the requirements of the circuit 22.

The microcontroller MP is designed for controlling at least one power switch IP, such as a MOSFET, through which there is controlled the electrical supply to the heaters or resistors 11, which is obtained by means of the battery VB of the vehicle.

In the preferred embodiment of the invention, the electronic control circuit of the device 1 comprises also a circuit CD' for conditioning the signal at output from the pressure sensor 17. The circuit CD' is for example constituted by an amplifier stage, built in a way in itself known to the person skilled in the sector; by way of example, the circuit CD' can be implemented via a device having the code No. AD524 manufactured by Analog Devices Inc., Norwood MA, USA; alternatively, the circuit CD' could have a configuration of the differential-amplifier type, obtained using a plurality of different electronic components, such as for example operational amplifiers and electrical resistors.

In a particularly advantageous embodiment, the microcontroller MP itself can be programmed for detecting periodically the degree of precision of the sensor means, for example of the pressure sensor 17, carrying out, if need be, an automatic calibration of the corresponding conditioning circuit, for example of the circuit CD'. Also for this purpose, the circuit 22 can be additionally provided with one or more offset circuits, for instance, one for each sensor provided, controlled by the microcontroller MP.

The offset circuit can comprise a short-circuit block SH, for example inserted on the sensor 17 and/or on the input of the conditioning circuit CD', made up for example of a photo-MOS or any other electronic switch or device suited to the purpose, preferably driven by the microcontroller MP; said offset circuit could moreover comprise a measurement block BM.

After having electronically short circuited the sensor via the block SH, the microcontroller MP detects, for example via the block BM and/or the block CD', the output voltage of the sensor 17, consequently determining the possible error and/or value to be regulated or compensated for the amplifier stage CD'.

In this regard, it should be noted that a pressure sensor typically has a minimum value of output tolerance, due for example to the environmental pressure; the components themselves of the conditioning block of the sensor are moreover subject to drifts or variations over time. The sum of the various tolerances can thus affect the precision of the pressure-detection signal.

If the sensor 17 is short circuited via the block SH, the output signal from said sensor, detected via the block BM and/or the block CD', must be equal to a pre-defined and constant value, for example 0 V or electrical voltage zero. Should there be detected via the block BM a value different from zero or said pre-defined value, the microcontroller MP controls a suitable and/or further circuit, for example similar to the circuit CC, in order to vary a further parameter of the circuit CD', until the signal measured by the block BM is brought to the pre-defined value or zero. There then follows re-opening of the electronic switch which constitutes the block SH to eliminate the short circuit. Alternatively, it is possible to make a measurement of the error or offset by means of successive calculations and/or compensations performed by the program or software.

The circuit CD' is designed for amplifying the output signal of the sensor 17 and can be calibrated or regulated by varying at least one external parameter, in particular a resistive value. Said variation of the external parameter is made at least via a calibration circuit CC, which preferably comprises for the purpose a digital potentiometer or else a selector or switch, either digital or automatic, of electrical resistances. The number of regulation steps, i.e., the number of values of resistance that can be selected, will be appropriately defined according to the requirements, and in any case will be such as to enable a calibration with the desired level of precision.

The use of a digital potentiometer is envisaged, in the preferred embodiment of the invention, for setting the correct value of amplification of the circuit CD', on account of the fact that the sensitivity or the output signal of a generic pressure sensor, of the type designated by 17, is not necessarily constant or else could vary from one sensor to another. Furthermore, in order to reduce the final costs of the device 1, the use of pressure sensors of lower cost, for example ones having greater tolerances on the output signal, could be preferable. The calibration or regulation of the gain or of other parameters of the circuit CD' can be carried out in the production stage, by supplying at input a reference pressure or signal; for example, it is possible to follow a procedure comprising at least some of the following steps:

- reading of the voltage value equivalent to a given pressure, preferably 6 bar, detected by the sensor 17 and/or the circuit CD' and/or the microcontroller MP;
- processing, via the microcontroller MP, of said voltage value, and calculation or definition of an appropriate value of the digital potentiometer CC;
- setting or varying, preferably via the microcontroller MP, of the value of the digital potentiometer CC and storing of the data in the memory MEM of the microcontroller MP in order to optimize the regulation and/or gain of the circuit CD;
- measurement or control of the voltage value for verifying whether said value is equivalent to the value and/or to the pre-set or desired pressure, for example 6 bar;
- possible repetition of said operations of measurement, setting and control, until the pre-set or desired value is reached; and
- storage of the voltage value, for example equivalent to a pressure of 6 bar, in the memory MEM of the microcontroller MP.

The equation implemented in the software for calculation of the pressure can thus be the following:

$$P = 6 * \frac{P_{Read}}{P_{Calibration}} + P_{Offset}$$

where:

$P_{Read}$ indicates the value of the pressure measured by the sensor 17;

$P_{Calibration}$ indicates the value equivalent to a pressure of 6 bar; and

$P_{offset}$ indicates the value to be added or subtracted due to the offset error of the conditioning circuit CD'.

As may be readily appreciated, the possibility of carrying out the aforesaid calibrations enables modification of the characteristics of detection of the pressure sensor 17, for example for the purpose of rendering it more or less sensitive according to the characteristics or size of the meshes of the filter F associated to the heater 1, as well as guaranteeing maximum precision of measurement thereof in all cases.

In a further embodiment, alongside the aforesaid calibration of a "hardware" type, i.e., designed to act on the characteristics of the electronic components, the control logic of the system can be programmed for providing also a calibration of a "software" type, i.e., a variation of the data and/or of the steps of the program, according or in relation to the values measured and/or the deviations with respect to pre-defined values.

For the above purpose, in the production stage, the pressure sensor 17 can be subjected to a known pressure, for example 5 bar, for which the voltage signal expected at output is known, for example 3 V. In the case where the aforesaid output signal is different from the expected one, for example it is 4 V, there is carried out a software compensation, in the sense that the microcontroller MP will be programmed to interpret in future a voltage of 4 V at output from the pressure sensor 17 as a signal indicating a pressure of 5 bar; the corresponding intermediate values can then be obtained with appropriate mathematical calculations.

As has been said, the control circuit 22 further comprises a sensor 23 designed to detect the temperature of the diesel fuel. Preferably, also associated to the sensor 23 is a respective conditioning circuit, such as for example an amplifier circuit or a voltage divider, designated by CD" in Figure 13.

The sensor 23 is not necessarily in direct contact with the diesel fuel, but is preferably in contact with the plastic of the wall 2", via the thermoconductive paste GS, or any other element suited for the purpose. Consequently, in this configuration, the sensor 23 does not necessarily measure the actual temperature of the diesel fuel, i.e., it does not necessarily make a direct measurement of the diesel fuel, but measures the temperature of the thermoplastic material constituting a wall 2" of the body 2; i.e., it detects the temperature of the diesel fuel indirectly, since the diesel fuel is in contact with the opposite side of the wall 2" of the body 2'.

Said wall 2", and consequently the temperature sensor, are influenced both by the temperature of the diesel fuel and by the heating caused by the resistors 11 and possibly by the power switch IP. For this reason, the times and the temperature triggering thresholds of the device 1 could for example be markedly influenced by the fact that the heater 1 has been activated or otherwise in the last few minutes and/or that the temperature of the diesel fuel and/or of the device 1 is particularly low.

For the above purpose, in a first possible embodiment, in the memory means MEM associated to the microcontroller MP there will be contained pre-set values and/or coefficients of compensation of the temperature detected by the sensor 23, used by the microcontroller itself for "correcting" or compensating said value. Said compensation coefficients may be calculated or detected, preferably according to variables such as the characteristics of thermal conductivity of the material constituting the body 2 or the wall 2", the thickness of said wall, the characteristics of the grease or paste GS, the modes of embodiment of the heaters 11, etc. The aforesaid coefficients are encoded and/or stored in a suitable way (for example in the form of data tables) and can be obtained through experimental analyses and/or testing steps in the course of production. In any case, the provision and/or use of the microcontroller MP enables, if need be, independent calibration of the latter, i.e., calibration of at least part of the circuit 22, with reference at least to the values measured by at least one sensor (for example, the sensor 23 and/or the sensor 17). For this purpose, for instance in the production stage, in the device 1 there can be made to flow a liquid or fluid having a known temperature and/or pressure, in order to enable a calibration of the type mentioned previously, i.e., a calibration controlled by the program or by software.

As regards the measurement of the temperature via the sensor 23, it is emphasized that the microcontroller MP is preferably programmed for controlling and compensating for the delays in the propagation of the temperature through the plastic wall of the body of the device 1. In this perspective, for example, the microcontroller MP can be pre-arranged for controlling the rapidity or curve with which the temperature varies, i.e., the temperature difference in time, in order to optimize the algorithm for calculation of the actual temperature, for example using data tables that are different according to the different ascending or descending ramps of the temperature measured.

According to a second possible embodiment, instead, combined to the circuit 22 and/or the conditioning circuit CD" is a further or second temperature sensor, for example an NTC, designated by 23' in Figure 13, mounted in the proximity of the electronic circuit 22 and/or of the power switch IP so as to measure the temperature of at least one of said elements and/or the environmental temperature in the chamber 6. In said further embodiment, the software of the microcontroller 22 integrates a further data or look-up table, which enables the microcontroller MP to operate according to the difference in temperature between the measurement made by the sensor 23 and the measurement made by the additional temperature sensor 23', compensating for possible measurement errors due to heating of the electronic circuit 22.

Upon ignition of the engine of the vehicle, with consequent activation of the device 1, the temperatures measured by the two sensors 23, 23' are substantially the same, and heating (i.e., supply of the resistors 11) is activated when the measured temperature is equal to or lower than a given threshold, for example 2°C nominal.

During the heating carried out by the resistors 11, the temperature detected by the additional sensor 23' rises much faster than the one detected by the sensor 23, in contact with the pipe in which the diesel fuel flows. Upon turning-off of the resistors 11, the temperature of the additional sensor 23' will be considerably higher than the temperature detected by the sensor 23; by way of example, the former may be 70°C whilst the latter may be 20°C.

Following upon de-activation of the device 1, the temperature of the diesel fuel could at this point start decreasing again but, on account of the heat accumulated by the plastic body 2, it may not be possible to measure the temperature of 2°C, i.e., the threshold necessary for re-activation of the heater 1. Consequently, according to the proposed embodiment, the threshold of re-activation of the resistors 11 is increased according to the temperature measured by the additional sensor 23'.

The definition of the table of correspondence between the temperature measured by the sensor 23 and the temperature measured by the additional sensor 23' will depend of course upon the geometry of the body 2. The look-up table will hence be obtained in the initial step of definition of the design, for example through laboratory tests. In this way, in the memory means MEM of the microcontroller MP there will be stored a program which is able to update dynamically the reference temperatures, i.e., the temperatures of turning-on and turning-off of the heating, for example according to formulae of the type:

$$T_{on} = T_{on\_nom} * \delta_i \, T$$

$$T_{off} = T_{off\_nom} * \delta_d \, T$$

where

$T_{on}$ and $T_{off}$ are the temperatures of turning-on and turning-off of the device 1,

$\delta_i \, T$ and $\delta_d \, T$ are multiplying coefficients obtained from the look-up table according to the difference between the temperature measured by the sensor 23' and the temperature measured by the sensor 23.

Returning to Figure 13, designated by TR is a line for transmission and/or reception of signals (in the form of logic states 1 and 0, and/or analog data, and/or voltage values, etc.), for example of a serial type with a standard protocol. The line TR is preferably used for programming of the microcontroller MP, as well as for transmitting therefrom information regarding operation of the circuit 22. For example, via the line TR the data detected by the sensor means 17, 23, 23' of the device 1 can be compared with data detected by an external instrument of measurement, such as an oscilloscope or any other system for measurement and testing in the production cycle.

The line TR can also be advantageously used to enable dialogue of the device 1 with other systems on board the vehicle (engine control unit, diagnostic systems, etc.).

Designated by LW is an alarm-signalling circuit, which has the purpose of issuing, via a suitable signalling or warning device WD, a signal of critical operation of the device 1. As will be seen in what follows, the conditions that generate an alarm signal can be for example detection by the sensor 17 of a value of pressure above a pre-set threshold for a pre-set time interval, or else detection by the sensor 23 of a temperature of the diesel fuel above a pre-set value, and/or any other anomalous condition that can be detected by the device 1.

Preferably, the circuit 22 is moreover provided with further lines or points of electrical interconnection (not represented in Figure 13) with the external world, preferably in order to detect certain operating parameters of the device 1 during at least one step of the production cycle. Said lines or points of electrical interconnection are preferably test points accessible from outside, in particular, being designed to enable a convenient electrical connection of the testing systems in the production cycle, for example for verification of the parameters regulated or calibrated by the microcontroller MP on the circuit 22 or else for an intervention for direct calibration by the control circuit. In said production stage there could in fact be applied different methods designed to carry out the aforesaid calibration or regulation, which preferably have in common the fact of envisaging at least some operations or steps performed automatically, in particular via at least one suitable production system, not illustrated herein.

Said production system preferably comprises hydraulic and/or fluid-dynamic and/or electrical means, designed to generate or simulate and detect all the conditions of operation and/or the necessary signals, in particular for the operations of programming, measurement, regulation or calibration, and final testing of the device 1. Said production system further comprises at least processing and/or control means, such as for example a personal computer and/or an appropriate dedicated electronic circuit. The production system could also advantageously comprise actuator means (actuators, solenoid valves, etc.), which preferably automatically perform movement of electrical-interconnection and/or hydraulic and/or pneumatic means or else means designed for providing the testing conditions.

A first method of automatic calibration could for example envisage at least some of the following steps:

- the device 1 and/or the circuit 22 is interconnected to an appropriate testing and regulation system in the production stage;
- the testing system programs and/or verifies operation of the program of the microcontroller MP on the circuit 22;
- the testing system detects and/or receives, through the aforesaid test points and/or communication lines TR, the values of at least some parameters of the circuit 22;
- the testing system carries out operations of processing and/or comparison on the basis of the data detected and/or received from the circuit 22; and
- the testing system sends data to the circuit 22, in particular to enable the microcontroller MP to carry out operations of processing and/or regulations.

In a variant of said testing and calibration method, the microcontroller MP of the circuit 22 could be designed only to receive the data detected by the production system, via external connections on said test points, and then autonomously compare and/or process said data according to the values of the sensors.

In the aforesaid examples of testing, then, processing of the data for calibration could be distributed partly on the external testing system and partly on the circuit 22 of the device 1, or else could reside completely on the circuit 22 or totally on the testing system, whilst the regulation or calibration, for example of the conditioning means CD', could be performed by the microcontroller MP. For a greater practicality of production, it could, however, be envisaged that the operations of calibration be carried out both by the production system and by the circuit 22. In said configuration there could hence be envisaged at least some of the following steps:

- the device 1 and/or the circuit 22 is interconnected to an appropriate testing and regulation system in the production stage;
- the testing system programs and/or verifies the operation of the program of the microcontroller MP on the circuit 22;
- the testing system detects directly, through said test points, the values of at least some parameters of the circuit 22;
- the testing system carries out operations of processing and/or comparison on the basis of the data detected;
- the testing system sends data or signals to the circuit 22, in particular through said test points, for example by programming and/or regulating directly the resistive value of the digital potentiometer or else of the conditioning circuit CC; and
- the testing system sends or transmits new data, and in particular the data corresponding to completion of the calibration procedure, to the microcontroller MP of the circuit 22 so that said circuit 22 can possibly carry out further or subsequent operations of processing and/or regulation and/or verification.

Said variant could enable a simplification of the program resident on the microcontroller MP, by assigning at least part of the processing operations and/or of the program to the external production system, thus obtaining a possible reduced occupation of the memory MEM of the circuit 22 and consequently a reduction in the corresponding costs.

The electronic circuit 22 may be built using any known technology suitable for the purpose. For example, the circuit 22 may comprise an integrated circuit of the ASIC type, which integrates the majority of the aforesaid electronic functions in one and the same component or chip having an extremely reduced size. Outside the ASIC circuit there could for example be provided only the power MOSFET and some capacitors for separation or decoupling of the d.c. current. Said solution enables a reduction in the overall dimensions of the circuit 22 and hence of the device 1 as a whole.

The typical condition of operation of the device 1, in the version operating as fuel heater, provides for continuous or cyclic heating of the diesel fuel, in the conditions envisaged. For this purpose, following upon the first ignition of the diesel engine, the device itself maintains the resistors 11 supplied for at least five minutes, at the end of which the circuit 22 carries out a new verification of the operating conditions. In particular, the device 1 is activated, i.e., the resistors 11 are supplied, for at least five minutes when the following conditions arise:

> a) engine ignition key inserted;
> b) battery voltage > 9 V;
> c) fuel temperature < 2°C $\pm$ 2°C;
> d) fuel pressure > = 6 bar;
> e) the device 1 has not been activated in the previous fifteen minutes.

Said situation typically occurs upon cold starting of the diesel engine. The information a) can be communicated to the microcontroller MP by another subsystem of the vehicle, whilst the information b), c) and d) is preferably obtained via a circuit MB for monitoring the battery voltage and the sensors 17 and 23, respectively; the information e) is generated directly by the microcontroller MP, which is provided with an internal timer of its own and a memory register for recording the times of previous activation of the resistors 11.

In the case where heating of the fuel has already been activated in the preceding fifteen minutes, the conditions that must be satisfied for a new or further supply of the resistors 11 are the following:

> a1) engine ignition key inserted;
> b1) battery voltage > 9 V;
> c 1) fuel temperature < 21 °C $\pm$ 2°C
> d1) fuel pressure >= 6 bar;

The value of pressure considered (conditions d and d1) is preferably the mean value of a number values detected by the sensor 17 in a reference period, for example one second.

In the case of activation of the device 1, the resistors 11 remain supplied for at least five minutes. In the case where the resistors 11 then remain supplied for more than five minutes but less than thirty minutes, supply thereof is interrupted only in the case where the turning-off conditions indicated in what follows intervene. In the case, instead, where the resistors 11 remain supplied for more than thirty minutes, supply thereof is in any case preferably interrupted for at least fifteen minutes.

Heating, i.e., supply of the resistors 11, is interrupted also when at least one of the following alternative situations arises:

- engine ignition key not inserted (and hence engine turned off);
- fuel temperature > 21 °C $\pm$ 2°C and fuel pressure > = 6 bar;
- operating voltage of the battery < 7.5 V (condition which for example indicates that a process of starting of the engine is in progress) for a given time, for example > 200 ms;

- fuel pressure < 6 bar 0.25 bar for a given time, for example one second, with fuel temperature > 2°C $\pm$ 2°C and with heating that has been activated at least once in the last fifteen minutes; and

- fuel pressure < 6 bar $\pm$ 0.25 bar for a given time, for example one second, with fuel temperature > 21 °C $\pm$ 2°C and with heating that has been activated more than once in the last fifteen minutes.

Issuing of an alarm signal, via the circuit LW, can occur in the case where the pressure detected via the sensor 17 is greater than or equal to 6 bar $\pm$ 0.1 bar for a given time, for example 10 second, and/or the temperature of the fuel detected via the sensor 23 is comprised between 21°C and 60°C, with the device 1 that has been activated more than once in the last fifteen minutes.

The use of a microcontroller-based electronic control circuit enables the operation of the device 1 to be rendered extremely precise, through the possibility of carrying out corrections of parameters and calibrations in the production stage and, if need be, even with the device already mounted on board the vehicle, for example in the case of updating of the program of the microcontroller MP in the appropriate centres of assistance.

It goes without saying that the use of a control logic of a digital type also enables a greater flexibility of use, in so far as the device 1 can be readily "parameterized" according to the requirements. Programming of the microcontroller MP can advantageously be carried out with the latter already mounted inside the respective body 2, and said programming can hence be carried out according to the actual requirements, with one and the same electronic configuration, but with different operating parameters according to the different production needs, the type of filter F, the material constituting the body 2, etc. From what has been said, there appears evident the possibility of stocking just one component or circuit 2, which can then be used for different devices, via a fast programming of the device already assembled. It goes without saying that operation of the device can be completely re-programmed via software or by the program, this evidently being impossible in the case of electronic circuits with analog components or of a digital type with non- re-writable memories. Furthermore, known production and testing systems of said heating devices are not suitable for executing at least part of the aforesaid operations for the automatic calibration of the device.

A further advantage of the use of a microcontroller-based electronic control circuit is the flexibility of operation that can be assigned to the heating means of the device 1.

In this regard, it is recalled that heating devices of a known type use, for heating of the fuel, PTCs controlled with a simple ON/OFF logic, which does not require particular solutions (the PTCs are in fact self-limiting in temperature and/or in electrical absorption).

The use of the microcontroller MP enables instead a "smart" control, for the purpose of modulating or regulating the electrical supply to the heating means, for example using the known pulse-width modulation (PWM) technique. In this perspective, it is pointed out that, in one possible embodiment of the invention, the resistors 11 could also be replaced by a resistor of a traditional type, with modulation of the supply power (for example using PWM).

Of course, without prejudice to the principle of the invention, the details of construction and the forms of implementation and/or control systems may vary widely with respect to what is described and illustrated herein purely by way of example, without thereby departing from the scope of the present invention as defined in the claims. Furthermore, in vehicles the invention could find applications different from the ones described herein purely by way of non-limiting example.

The control circuit 22 could possibly be made of electronic components of another type (for example operational circuits, electrical resistors, etc.), designed in any case to provide the control functions even without the presence of a microcontroller or a microprocessor, for example with the possibility of calibrating "from outside", in particular by means of said production and/or testing system, at least one electronic component (for example a digital potentiometer) of the type integrating a nonvolatile memory.

In the case described previously, the memory means MEM are not necessarily associated to the microcontroller MP, and said means could be associated to other functional components or blocks (potentiometer, sensors, conditioning circuits, etc.) of the circuit arrangement 22.

**Claims**

1.  A device for heating a fluid used in a vehicle, in particular a fuel, said device comprising a body (2) having an inlet (3) and an outlet (4), there being arranged inside the body (2) electrical heating means (11) in contact with the fluid, control means (IP) for controlling electrical supply of the heating means (11), sensor means (17, 23) for detecting at least one respective characteristic of the fluid, and a circuit arrangement (22) provided for controlling at least the electrical-supply control means (IP) and the sensor means (17, 23), said circuit arrangement (22) comprising nonvolatile memory means (MEM), wherein said memory means (MEM) are pre-arranged for containing at least modifiable or re-writable data or parameters, in particular for the purposes of regulation and/or control of operation of the device (1), said device being **characterized in that** said body (2) is divided by a wall (2") into at least two chambers (6, 7), one chamber (6) housing at least one of said circuit arrangement (22) and said sensor means (17, 23), the other chamber (7) setting in communication said inlet (3) and said outlet (4) and housing said heating means (11).

2. The device according to Claim 1, **characterized in that** said memory means (MEM) are of the nonvolatile type and are electrically re-writable, in particular of a flash or EEPROM type.

3. The device according to Claim 1, **characterized in that** said circuit arrangement (22) comprises at least one conditioning circuit (CD', CD") for conditioning the output signal of a respective sensor means (23, 17).

4. The device according to Claim 1, **characterized in that** said sensor means (17, 23) comprise at least one temperature sensor (23) and **in that** said data comprise at least one temperature threshold or value, where in particular said data are designed to compensate for the value detected by said first temperature sensor (23), in particular under the control of said circuit arrangement (22).

5. The device according to Claim 1, **characterized in that** said sensor means (17, 23) comprise a pressure sensor (27).

6. The device according to Claim 1, **characterized in that** said data comprise at least one of

   - a pressure threshold or value,
   - minimum and/or maximum times for supply of the heating means (11),
   - values or thresholds of operating voltage of a source (VB) for electrical supply of the device itself.

7. The device according to Claim 3, **characterized in that** said circuit arrangement (22) is operative to control periodically the signal or the degree of precision of said sensor means (17, 23) and, if need be, carry out an automatic calibration of said conditioning circuit (CD').

8. The device according to Claim 1, **characterized in that** said circuit arrangement (22) is designed to control electrical supply to the heating means (11) for at least one given time, when the following conditions are verified:

   a) engine ignition key inserted;
   b) battery voltage above a respective first threshold;
   c) fluid or fuel temperature below a respective first threshold;
   d) fluid or fuel pressure greater than or equal to a respective first threshold;
   and
   e) heating means (11) not activated in a preceding given time interval.

9. The device according to Claim 1, **characterized in that** in said wall (2") there is defined an opening (16) designed to set in communication the two chambers (6, 7), in a position corresponding to said opening (16) there being operatively set a pressure sensor (17).

10. The device according to Claim 9, **characterized in that** said pressure sensor (17) is kept in position via a respective support (18) and rests at the bottom on an elastic seal ring (20).

11. The device according to Claim 1, **characterized in that** said heating means comprise a plurality of resistors with positive temperature coefficient (11), operatively set between a first and a second metal plate (9, 10).

12. The device according to claim 1, **characterized in that** said body (2) is designed to be mechanically and hydraulically coupled to a filter (F).

13. The device according to Claim 1, **characterized in that** said sensor means (17, 23) comprise at least one of a pressure sensor (17) and a temperature sensor (23).

14. The device according to Claim 13, **characterized in that** said temperature sensor (23) is arranged in said one chamber (6) for detecting in an indirect manner the temperature of the fluid in said other chamber (7).

15. The device according to Claim 1, **characterized by** comprising a first and a second terminal (T1, T2) for connecting said circuit arrangement to said heating means (11), the first and the second terminals (T1, T2) passing through said wall (2").

**Patentansprüche**

1. Vorrichtung zum Erwärmen eines Fluids, das in einem Fahrzeug verwendet wird, insbesondere eines Kraftstoffs, wobei die Vorrichtung enthält: einen Körper (2), der einen Einlass (3) und einen Auslass (4) hat, wobei im Körper (2) eine elektrische Heizeinrichtung (11) in Kontakt mit dem Fluid angeordnet ist, eine Steuereinrichtung (IP), die die elektrische Versorgung der Heizeinrichtung (11) steuert, eine Sensoreinrichtung (17, 23), die wenigstens eine jeweilige Eigenschaft des Fluids erfasst, und eine Schaltungsanordnung (22), die zum Steuern wenigstens der elektrischen Versorgungs-Steuereinrichtung (IP) und der Sensoreinrichtung (17, 23) vorgesehen ist, wobei die Schaltungsanordnung (22) eine nicht flüchtige Speichereinrichtung (MEM) enthält, wobei die Speichereinrichtung (MEM) im voraus dazu eingerichtet ist, wenigstens abänderbare oder überschreibbare Daten oder Parameter insbesondere für die Zwecke der Regulierung und/oder Steuerung des Betriebs der Vorrichtung (1) zu enthalten, wobei die Vorrichtung **dadurch gekennzeichnet ist, dass** der Körper (2) mit einer Wand (2") in wenigstens zwei Kammern (6, 7) unterteilt ist, wobei eine Kammer (6) die Schaltungsanordnung (22) und/oder die Sensoreinrichtung (17, 23) aufnimmt und die andere Kammer (7) den Einlass (3) und den Auslass (4) in Verbindung setzt und die Heizeinrichtung (11) aufnimmt.

2. Vorrichtung nach Anspruch 1, **dadurch gekennzeichnet, dass** die Speichereinrichtung (MEM) vom nicht flüchtigen Typ und elektrisch überschreibbar, insbesondere von einem Flash- oder EEPROM-Typ ist.

3. Vorrichtung nach Anspruch 1, **dadurch gekennzeichnet, dass** die Schaltungsanordnung (22) wenigstens eine Aufbereitungsschaltung (CD', CD") enthält, die das Ausgangssignal einer entsprechenden Sensoreinrichtung (23, 17) aufbereitet.

4. Vorrichtung nach Anspruch 1, **dadurch gekennzeichnet, dass** die Sensoreinrichtung (17, 23) wenigstens einen Temperatursensor (23) enthält, und **dadurch**, dass die Daten wenigstens einen Temperaturschwellenwert enthalten, wobei insbesondere diese Daten dazu eingerichtet sind, den Wert, der vom ersten Temperatursensor (23) erfasst wird, insbesondere unter Steuerung der Schaltungsanordnung (22) zu kompensieren.

5. Vorrichtung nach Anspruch 1, **dadurch gekennzeichnet, dass** die Sensoreinrichtung (17, 23) einen Drucksensor (27) enthält.

6. Vorrichtung nach Anspruch 1, **dadurch gekennzeichnet, dass** die Daten wenigstens eine der folgenden Daten beinhalten:

   - einen Druckgrenzwert oder-wert,
   - minimale und/oder maximale Zeiten für die Versorgung der Heizeinrichtung (11),
   - Werte oder Grenzwerte der Betriebsspannung einer Quelle (VB) für die elektrische Versorgung der Vorrichtung an sich.

7. Vorrichtung nach Anspruch 3, **dadurch gekennzeichnet, dass** die Schaltungsanordnung (22) betätigt werden kann, um das Signal oder den Präzisionsgrad der Sensoreinrichtung (17, 23) periodisch zu steuern und, sofern dies erforderlich ist, eine automatische Kalibrierung der Aufbereitungsschaltung (CD') auszuführen.

8. Vorrichtung nach Anspruch 1, **dadurch gekennzeichnet, dass** die Schaltungsanordnung (22) dazu bestimmt ist, die elektrische Versorgung der Heizeinrichtung (11) für wenigstens eine bestimmte Zeit zu steuern, wenn die folgenden Bedingungen bestätigt werden:

   a) Maschinenzündschlüssel eingesteckt;
   b) Batteriespannung über einem entsprechenden ersten Schwellenwert;
   c) Fluid- oder Kraftstofftemperatur unter einem entsprechenden ersten Schwellenwert;
   d) Fluid- oder Kraftstoffdruck größer oder gleich einem entsprechenden ersten Schwellenwert; und
   e) Heizeinrichtung (11) in einem vorangehenden gegebenen Zeitintervall nicht aktiviert.

9. Vorrichtung nach Anspruch 1, **dadurch gekennzeichnet, dass** in der Wand (2") eine Öffnung (16) definiert ist, die dazu bestimmt ist, die beiden Kammern (6, 7) zu verbinden, wobei in einer Position entsprechend der Öffnung (16) ein Drucksensor (17) wirkungsmäßig eingefügt ist.

10. Vorrichtung nach Anspruch 9, **dadurch gekennzeichnet, dass** der Drucksensor (17) über eine entsprechende Halterung (18) an Ort und Stelle gehalten ist und auf der Unterseite auf einem elastischen Dichtungsring (20) ruht.

11. Vorrichtung nach Anspruch 1, **dadurch gekennzeichnet**, das die Heizeinrichtung eine Vielzahl von Widerständen mit einem positiven Temperaturkoeffizienten (11) enthält, die wirkungsmäßig zwischen einer ersten und einer zweiten Metallplatte (9, 10) angeordnet sind.

12. Vorrichtung nach Anspruch 1, **dadurch gekennzeichnet, dass** der Körper (2) dazu eingerichtet ist, mit einem Filter (F) mechanisch und hydraulisch gekoppelt zu werden.

13. Vorrichtung nach Anspruch 1, **dadurch gekennzeichnet, dass** die Sensoreinrichtung (17, 23) einen Drucksensor (17) und/oder einen Temperatursensor (23) enthält.

14. Vorrichtung nach Anspruch 13, **dadurch gekennzeichnet, dass** der Temperatursensor (23) in der einen Kammer (6) angeordnet ist, um indirekt die Temperatur des Fluids in der anderen Kammer (7) zu erfassen.

**15.** Vorrichtung nach Anspruch 1, **dadurch gekennzeichnet, dass** sie einen ersten und einen zweiten Anschluss (T1, T2) zum Verbinden der Schaltungsanordnung mit der Heizeinrichtung (11) enthält, wobei der erste und der zweite Anschluss (T1, T2) durch die Wand (2") verlaufen.

**Revendications**

**1.** Dispositif de chauffage d'un fluide utilisé dans un véhicule, notamment un carburant, ledit dispositif comprenant un corps (2) comportant une entrée (3) et une sortie (4), étant agencés dans le corps (2) des moyens de chauffage électrique (11) en contact avec le fluide, des moyens de commande (IP) pour commander l'alimentation électrique des moyens de chauffage (11), des moyens de capteur (17, 23) pour détecter au moins une caractéristique respective du fluide, et un agencement de circuit (22) destiné à commander au moins les moyens de commande d'alimentation électrique (IP) et les moyens de capteur (17, 23), ledit agencement de circuit (22) comprenant des moyens de mémoire non volatils (MEM), dans lequel lesdits moyens de mémoire (MEM) sont préagencés pour contenir au moins des données ou paramètres modifiables ou réinscriptibles, notamment à des fins de régulation et/ou de commande de fonctionnement du dispositif (1), ledit dispositif étant **caractérisé en ce que** ledit corps (2) est divisé par une paroi (2") en au moins deux chambres (6, 7), une chambre (6) logeant au moins l'un parmi ledit agencement de circuit (22) et ledit moyens de capteur (17, 23), l'autre chambre (7) mettant en communication ladite entrée (3) et ladite sortie (4) et logeant lesdits moyens de chauffage (11).

**2.** Dispositif selon la revendication 1, **caractérisé en ce que** lesdits moyens de mémoire (MEM) sont de type non volatil et sont électriquement réinscriptibles, notamment de type flash ou EEPROM.

**3.** Dispositif selon la revendication 1, **caractérisé en ce que** ledit agencement de circuit (22) comprend au moins un circuit de conditionnement (CD', CD") pour conditionner le signal de sortie d'un moyen de capteur (23, 17) respectif.

**4.** Dispositif selon la revendication 1, **caractérisé en ce que** lesdits moyens de capteur (17, 23) comprennent au moins un premier capteur de température (23) et **en ce que** lesdites données comprennent au moins un seuil ou une valeur de température, où en particulier lesdites données sont conçues pour compenser la valeur détectée par ledit premier capteur de température (23), notamment sous la commande dudit agencement de circuit (22).

**5.** Dispositif selon la revendication 1, **caractérisé en ce que** lesdits moyens de capteur (17, 23) comprennent un capteur de pression (27).

**6.** Dispositif selon la revendication 1, **caractérisé en ce que** lesdites données comprennent au moins un élément parmi :

- un seuil ou une valeur de pression,
- des durées minimale et/ou maximale d'alimentation des moyens de chauffage (11),
- des valeurs ou seuils de tension de fonctionnement d'une source (VB) pour l'alimentation électrique du dispositif lui-même.

**7.** Dispositif selon la revendication 3, **caractérisé en ce que** ledit agencement de circuit (22) est opérationnel pour commander périodiquement le signal ou le degré de précision dudit moyen de capteur (17, 23) et si nécessaire, réaliser un calibrage automatique dudit circuit de conditionnement (CD').

**8.** Dispositif selon la revendication 1, **caractérisé en ce que** ledit agencement de circuit (22) est conçu pour commander l'alimentation électrique des moyens de chauffage (11) pendant au moins une durée donnée, lorsque les conditions suivantes se vérifient :

a) la clé de démarrage du moteur est insérée ;
b) la tension de la batterie est supérieure à un premier seuil respectif ;
c) la température du fluide ou carburant est inférieure à un premier seuil respectif ;
d) la pression de fluide ou carburant est supérieure ou égale à un premier seuil respectif ; et
e) les moyens de chauffage (11) ne sont pas activés au cours d'un intervalle temporel précédent donné.

**9.** Dispositif selon la revendication 1, **caractérisé en ce que** dans ladite paroi (2"), on définit une ouverture (16) conçue pour mettre en communication les deux chambres (6, 7) dans une position correspondant à ladite ouverture (16), où est placé de manière opérationnelle un capteur de pression (17).

**10.** Dispositif selon la revendication 9, **caractérisé en ce que** ledit capteur de pression (17) est maintenu en position via un support (18) respectif et repose au fond sur une bague d'étanchéité élastique (20).

**11.** Dispositif selon la revendication 1, **caractérisé en ce que** lesdits moyens de chauffage comprennent une pluralité de résistances avec un coefficient de température positive (11), placées de manière opérationnelle entre une première et une deuxième plaque métallique (9, 10).

**12.** Dispositif selon la revendication 1, **caractérisé en ce que** ledit corps (2) est conçu pour être mécaniquement et hydrauliquement couplé à un filtre (F).

**13.** Dispositif selon la revendication 1, **caractérisé en ce que** lesdits moyens de capteur (17, 23) comprennent au moins un capteur de pression (17) et un capteur de température (23).

**14.** Dispositif selon la revendication 13, **caractérisé en ce que** ledit capteur de température (23) est agencé dans ladite une chambre (6) pour détecter d'une manière indirecte la température du fluide dans ladite autre chambre (7).

**15.** Dispositif selon la revendication 1, **caractérisé en ce qu'**il comprend une première et une deuxième borne (T1, T2) pour raccorder ledit agencement de circuit auxdits moyens de chauffage (11), les première et deuxième bornes (T1, T2) passant à travers ladite paroi (2").

Fig. 1

Fig. 12

Fig. 2

Fig. 3

Fig. 4

Fig. 5

Fig. 6

Fig. 7 · Fig. 8 · Fig. 9 · Fig. 10 · Fig. 11

Fig. 13

EP 2 075 452 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2326869 A1
- US 5094198 A